# EUROPÄISCHE PATENTANMELDUNG

(11) **EP 0 618 127 A1**
(43) Veröffentlichungstag der Anmeldung: **05.10.1994**
(21) Anmeldenummer: 94101818.6
(22) Anmeldetag: 07.02.1994
(51) Int. Cl.: B62D 13/04, B62D 7/15, B60P 1/02

(54) **Hubfahrzeug zum Umschlag von Lasten über Paletten**

(30) Priorität: 29.03.1993 DE 4310171
(71) Anmelder: KAMAG TRANSPORTTECHNIK GMBH & CO., D-89079 Ulm (DE)
(72) Erfinder: Weinmann, Karl, D-89134 Blaustein-Herrlingen (DE); Deissler, Norbert, D-89079 Ulm (DE)
(74) Vertreter: Kohlmann, Karl Friedrich, Dipl.-Ing.

(57) **Zusammenfassung**

Um ein völlig neuartiges Hubwagenkonzept zur Verfügung zu stellen, das unter Verwendung bewährter Technik einfach aufgebaut und störunanfällig konzipiert ist und sich insbesondere zum Umschlag von Lasten über sogenannte "Cassetten" eignet, werden erfindungsgemäß pro Achslinie (11 bis 14) zwei Pendelachsen vorgesehen, die jeweils über eine vertikale Achse (16) drehbar an einem Tragrahmen (4) befestigt sind, wobei eine Steuereinrichtung vorgesehen ist, die in Diagonalfahrt alle Pendelachsen nach links bzw. rechts unabhängig vom Einschlagwinkel zwischen Antriebseinheit (1) und Tragrahmen (4) in eine definierte Anschlaglage einschlägt.

## Beschreibung

Die vorliegende Erfindung betrifft ein Hubfahrzeug zum Umschlag von Lasten über Paletten,
- mit einer Antriebseinheit,
- einem Tragrahmen, der mit der Antriebseinheit um eine vertikale Achse verschwenkbar verbunden ist,
- mindestens zwei Achslinien, die an dem der Antriebseinheit entgegengesetzten Ende des Tragrahmens angeordnet sind,
- sowie einer Steuereinrichtung, über die die Räder der Achslinien des Tragrahmens lenkbar sind.

Unter Paletten versteht man bekanntlich Transportplattformen, mit deren Hilfe der Güterumschlag zwischen verschiedenen Transportträgern rationalisiert werden kann. Je nach Einsatzzweck sind Paletten unterschiedlichster Größe bekannt. So werden beispielsweise im sogenannten Ro-Ro-Betrieb (Güterumschlag vom Transportträger Schiff auf straßen- oder schienengebundene Transportträger und umgekehrt) standardisierte Paletten mit einer Unterfahrhöhe von 703 mm und einer Ladenflächehöhe von 850 mm eingesetzt. Derartige standardisierte Paletten werden in der Fachwelt häufig auch als sogenannte "Cassetten" bezeichnet.

Beim Güterumschlag ist ein wesentlicher Aspekt der Raumbedarf. So besteht allgemein die Forderung, Paletten insbesondere bei der Zwischenlagerung möglichst dicht bei dicht, das heißt, mit möglichst geringem Zwischenraum abstellen zu können. Diese Forderung müssen die beim Güterumschlag eingesetzten Hubfahrzeuge ohne zeitraubende und komplizierte Manöverierarbeit auf einfache Weise erfüllen können. Eine derartige Forderung ist insbesondere beim Ro-Ro-Betrieb unabdingbar, da die Paletten bzw. Cassetten an Bord aus Sicherheitsgründen ohne Zwischenraum nebeneinander stehen müssen, da sonst Einzelverzurrungen notwendig wären, die Zeit, Arbeitskraft und ungenutzten Raum erfordern würden.

Bekannte Hubfahrzeuge erfüllen diese Forderung durch eine Steuerung, über die die Räder der Achsellinien beispielsweise in eine sogenannte "Hundegangstellung" gebracht, d.h. gemeinsam um einen für die jeweilige Manöveriersituation notwendigen Winkel nach links oder rechts eingeschlagen werden können. Dadurch ist eine sogenannte Diagonalfahrt möglich, über die die Paletten ohne große Manöverierarbeit, d.h. ohne die Notwendigkeit eines wiederholten Ein- und Ausfahrens zum einen, dicht nebeneinander abgestellt und zum anderen auf einfache Weise wieder auseinanderbewegt werden können.

Die Fähigkeit zur Diagonalfahrt ist im Fahrbetrieb derartiger Hubfahrzeuge auch für andere Anwendungszwecke von wesentlicher Bedeutung. So kann beispielsweise in Stahlwerken oder überall dort, wo schwere Lasten umgeschlagen werden müssen, eine Feinpositionierung der Paletten in der letzten Manöverierphase durch Diagonalfahrt erzielt werden.

Der Vorteil der Diagonalfahrt wird bei Hubfahrzeugen der bekannten Art über eine Steuereinrichtung realisiert, welche eine Elektronik aufweist, über die der jeweils für die Diagonalfahrt gewünschte Winkel als Sollwert eingegeben wird. Über diesen Sollwert wird dann über eine komplizierte Hydraulik bzw. über Proportionaltechnik der Einschlagwinkel an den Rädern realisiert.

Steuereinrichtungen der hierfür erforderlichen Art sind insbesondeere im rauhen Fahrbetrieb, wie er beim Ro-Ro-Umschlag, im Stahlwerk, auf Werften oder dergleichen unvermeidbar ist, sehr kritisch. So ist die Elektronik bekanntlich auch bei geschützter Anordnung relativ empfindlich und die komplizierte Servohydraulik aufwendig und störanfällig. Für Steuereinrichtungen an Hubfahrzeugen der hier zur Diskussion stehenden Art ist daher ein nicht unerheblicher Aufwand erforderlich.

Aufgabe der vorliegenden Erfindung ist es, ein völlig neuartiges Hubwagenkonzept zur Verfügung zu stellen, das unter Verwendung bewährter Technik einfach aufgebaut und störunanfällig konzipiert ist uns sich insbesondere zum Umschlag von Lasten über sog. "Cassetten" eignet.

Diese Aufgabe wird erfindungsgemäß dadurch gelöst, daß
- pro Achslinie zwei Pendelachsen vorgesehen sind, die jeweils über eine vertikale Achse drehbar an dem Tragrahmen befestigt sind,
- und daß die Steuereinrichtung derart gestaltet ist, daß in Diagonalfahrt alle Pendelachsen nach links bzw. rechts unabhängig vom Einschlagwinkel zwischen Antriebseinheit und Tragrahmen in eine definierte Anschlaglage eingeschlagen werden.

Bekannte Hubwagen der gattungsgemäßen Art sind überwiegend pro Achslinie mit einer Starrachse mit Achsschenkellenkung ausgestattet. Gegenüber diesem bekannten Konzept hat die erfindungsgemäße Anordnung von zwei Pendelachsen pro Achslinie, die jeweils über eine vertikale Achse drehbar an dem Tragrahmen befestigt sind, den Vorteil, daß Bodenunebenheiten quer zur Fahrtrichtung so überfahren werden, daß die Belastung aller Reifen gleichmäßig und somit eine immer wiederkehrende Überlastung einzelner Reifen ausgeschlossen ist. Somit steigt die Lebensdauer der Reifen.

Aufgrund der erfindungsgemäßen Ausgestaltung der Steuereinrichtung bedarf es für die Diagonalfahrt keiner aufwendigen Elektronik. So liegt der erfindungsgemäßen Ausgestaltung der Gedanke zugrunde, in Abkehr von den bekannten Lösungen für die Diagonalfahrt alle Pendelachsen absolut unabhängig vom Einschlagwinkel zwischen Antriebseinheit und Tragrahmen nach links bzw. nach rechts in eine vorbestimmte Anschlaglage einzuschlagen. Dabei wird zugunsten einer einfach aufgebauten und störunanfälligen Steuereinrichtung in Kauf genommen, daß ein Nachlenken nicht möglich ist.

Dies schließt nicht aus, daß mit der erfindungsgemäßen Konstruktion im Bedarfsfalle bei entsprechender Ausgestaltung auch ohne komplizierte Elektronik ein Nachlenken des Tragrahmens unabhängig vom Einschlagwinkel der Antriebseinheit realisiert werden kann. Hierfür ist es lediglich erforderlich, die vordere bzw. die vorderen Achs linien in Geradeausposition festzustellen und den übrigen Achslinien über die Steuereinheit den jeweils benötigten Lenkeinschlag zuzuweisen. Es führt zu einer Verbesserung der Rangiereigenschaften bei Rückwärtsfahrt sowie beim Unterfahren von Cassetten.

Hubfahrzeuge für schwere Lasten sind mit einem Tragrahmen ausgestattet, der mindestens drei Achslinien aufweist. Bei einem bevorzugten Ausführungsbeispiel dieser Art, ist erfindungsgemäß die Steuereinrichtung derart gestaltet, daß
- im Fahrbetrieb die Pendelachsen der vorderen Achslinie bzw. der vorderen Achslinien in Geradeausposition festgestellt, und
- die übrigen Pendelachsen der hinter dieser bzw. hinter diesen festgestellten Pendelachsen liegenden Achslinien in Abhängigkeit vom Einschlagwinkel zwischen Antriebseinheit und Tragrahmen eingeschlagen werden.

Dieser Ausgestaltung liegt in Weiterbildung der gestellten Aufgabe der Gedanke zugrunde, die eingesetzte Steuerungstechnik dadurch zu vereinfachen, daß bei drei Achslinien die erste Achslinie und bei vier oder mehr Achslinien zumindest die beiden ersten Achslinien durch Feststellung in der Geradeausposition keiner Steuerung bedürfen und nur die übrigen Pendelachsen in Abhängigkeit vom Einschlagwinkel zwischen Antriebseinheit und Tragrahmen gesteuert werden.

Diese Steuerung der übrigen Pendelachsen in Abhängigkeit des Einschlagwinkels kann auf verschiedene Weise erfolgen. Eine besonders bevorzugte Ausgestaltung wird dadurch erreicht, daß der Einschlagwinkel zwischen Antriebseinheit und Tragrahmen über ein hydraulisches Verdrängersystem abgegriffen wird, das mit den hydraulischen Lenkzylindern der übrigen Pendelachsen in Verbindung steht. Die hierfür notwendige hydraulische Technik ist grundsätzlich bekannt, einfach aufgebaut und hat sich wegen ihrer geringen Störanfälligkeit auch im rauhen Betrieb bewährt. Bei einer bevorzugten Ausgestaltung dieser Art ist das hydraulische Verdrängersystem über hydraulische Leitungen unmittelbar mit den hydraulischen Lenkzylindern in Verbindung.

Grundsätzlich kann die Antriebseinheit in verschiedenster Weise gestaltet sein. Eine besonders kostengünstigste Ausführungsform wird dann erreicht, wenn als Antriebseinheit vorhandene Sattelauflieger eingesetzt werden und damit der Tragrahmen als reiner Nachläufer ausgebildet werden kann.

Stehen derartige Sattelauflieger nicht zur Verfügung, ist es vorteilhaft, die Antriebseinheit als mit dem Tragrahmen verbunden integrierten Triebkopf auszubilden.

Unabhängig davon, welche Art von Antriebseinheit gewählt wird, ist es vorteilthaft, das Anschlußende des Tragrahmens an den Sattelauflieger bzw. den Triebknopf als Schwanenhalskonstruktion auszubilden.

Für den Fall, daß als Antriebseinheit ein Triebkopf eingesetzt wird, ist es vorteilhaft, daß im Bereich des Anschlußendes des Tragrahmens eine Hubeinrichtung vorgesehen wird, die dann zusammen mit der Hubeinrichtung der Pendelachsen das für den Umschlag der Paletten notwendige Anheben und Absenken des Tragrahmens ermöglicht.

Eine besonders vorteilhafte Ausgestaltung des Tragrahmens wird erreicht, wenn dieser im Bereich seiner seitlichen Begrenzung mit über seine gesamte Länge durchlaufenden Außenträgern ausgestattet ist.

Bei Hubfahrzeugen der bekannten Art, sind die Tragrahmen im Bereich der Achslinien zur Rahmenmittelachse hin eingezogen. Dadurch ergibt sich eine Art Taillienkonzeption des Tragrahmens, die keine seitlich durchlaufenden Rahmenteile aufweist. Diese Taillienkonzeption ist erforderlich um den durch die Achsschenkellenkung erforderlichen Freiraum nach außen zu erhalten, da die Räder beim Verschwenken über die Außenkontur des Tragrahmens hinausragen. Derartige Taillienkonzeptionen im Achslinienbereich zwingen jedoch dazu die tragenden Teile des Tragrahmens im Bereich von dessen Längsmittelachse zu konzentrieren, wodurch die Tragrahmenkonstruktion komplizierter wird. Aufgrund des erfindungsgemäßen Einsatzes an sich bekannter Pendelachsen kann ein Tragrahmen für ein erfindungsgemäßes Hubfahrzeug jedoch mit seitlich durchlaufenden Rahmenteilen ausgestattet werden, was nicht nur die Konstruktion vereinfacht, sondern wegen der Führungsfunktion der über die gesamte Länge durchlaufenden Rahmenteile auch das Rangieren des Tragrahmens beim Ein- und Ausfahrvorgang unter der Palette erleichtert. Die durchlaufenden Rahmenteile haben darüberhinaus den Vorteil, daß die Beschädigungsgefahr für die Paletten oder Cassetten beim Ein- und Ausfahrvorgang reduziert wird. Die Praxis hat nämlich gezeigt, daß die vorspringenden Rahmenteile bei der bekannten Taillienkonzeption selbst bei Anordnung von Abrundungen oder Anfasungen Beschädigungen an den Paletten oder Cassetten herbeiführen können.

Das Verschwenken von Pendelachsen um eine vertikale Achse über hydraulische Lenkzylinder ist im Fahrzeugbau grundsätzlich bereits bekannt. Der Einsatz dieser bekannten Technik ist jedoch für Hubfahrzeuge der erfindungsgemäßen Art besonders vorteilhaft. So ist für die Diagonalfahrt lediglich eine sehr einfache Steuereinrichtung erforderlich, da die Lenkzylinder in diesem Fahrzustand einfach nach links bzw. rechts bis in eine definierte Anschlaglage aus- bzw. eingefahren werden, was mit geringst möglichem Steueraufwand realisiert werden kann, zumal das Ein- schlagen der Pendelachsen aufgrund des erfindungsgemäßen Konzeptes unabhängig vom Einschlagwinkel zwischen An- triebseinheit und Tragrahmen erfolgt.

Sofern für das Verschwenken der Pendelachsen hydraulische Lenkzylinder vorgesehen werden, kann im Fahrbetrieb (d.h. außerhalb des Zustandes der Diagonalfahrt) der Einschlagwinkel der jeweiligen Pendelachsen über ein hydraulisches Verdrängersystem in Abhängigkeit vom Einschlagwinkel zwischen Antriebseinheit und Tragrahmen abgegriffen werden. Zu diesem Zweck ist es lediglich erforderlich das Verdrängersystem mit den hydraulischen Lenkzylindern der übrigen Pendelachsen in Verbindung zu bringen.

Bei einer bevorzugten Verbindung erfolgt dies über einfache hydraulische Leitungen, über die das hydraulische Verdrängersystem unmittelbar mit den hydraulischen Lenkzylindern der übrigen Achsen verbunden sind.

Wie eingangs bereits dargestellt, liegt der erfindungsgemäßen Ausgestaltung der Gedanke zugrunde, in Abkehr von den bekannten Lösungen für die Diagonalfahrt alle Pendelachsen absolut unabhängig vom Einschlagwinkel zwischen Antriebseinheit und Tragrahmen nach links bzw. nach rechts in eine vorbestimmte Anschlaglage einzuschlagen. Steuerungstechnisch läßt sich dies für den Fahrbetrieb in einfacher Weise dadurch realisieren, daß für den Spezialfall der Diagonalfahrt die hydraulische Verbindung zwischen dem hydraulischen Verdrängersystem und den Lenkzylindern der Pendelachsen unterbrochen wird und alle Lenkzylinder aller Pendelachsen gemeinsam wahlweise nach links oder rechts in die definierte Anschlaglage ausgefahren werden. Die Anschlaglage kann dabei in verschiedenster Weise definiert werden. So ist es denkbar, einfache mechanische Anschläge vorzusehen oder die Anschlaglage auf hydraulischem Wege festzulegen.

Im folgenden sind zur weiteren Erläuterung und zum besseren Verständnis zwei Ausführungsbeispiele eines erfindungsgemäßen Hubwagens unter Bezugnahme auf die beigefügten Zeichnungen näher beschrieben und erläutert.
- Fig. 1: zeigt ein erstes Ausführungsbeispiel eines erfindungsgemäßen Hubwagens, bei dem als Antriebseinheit (1) ein herkömmlicher Sattelauflieger eingesetzt ist und der Tragrahmen (4), als Nachläufer ausgebildet ist,
- Fig. 2: zeigt ein zweites Ausführungsbeispiel eines erfindungsgemäßen Hubwagens, bei dem die Antriebseinheit (1) als mit dem Tragrahmen (4) verbundener, integrierter Triebkopf ausgebildet ist,
- Fig.3 und 4: zeigen in einer Seiten- und einer Draufsicht den Nachläufer des Ausführungsbeispieles gemäß Fig. 1 in Kurvenfahrt, und
- Fig.5: zeigt in einer Draufsicht den Nachläufer des Ausführungsbeispieles gemäß Fig. 1 in Diagonalfahrt.

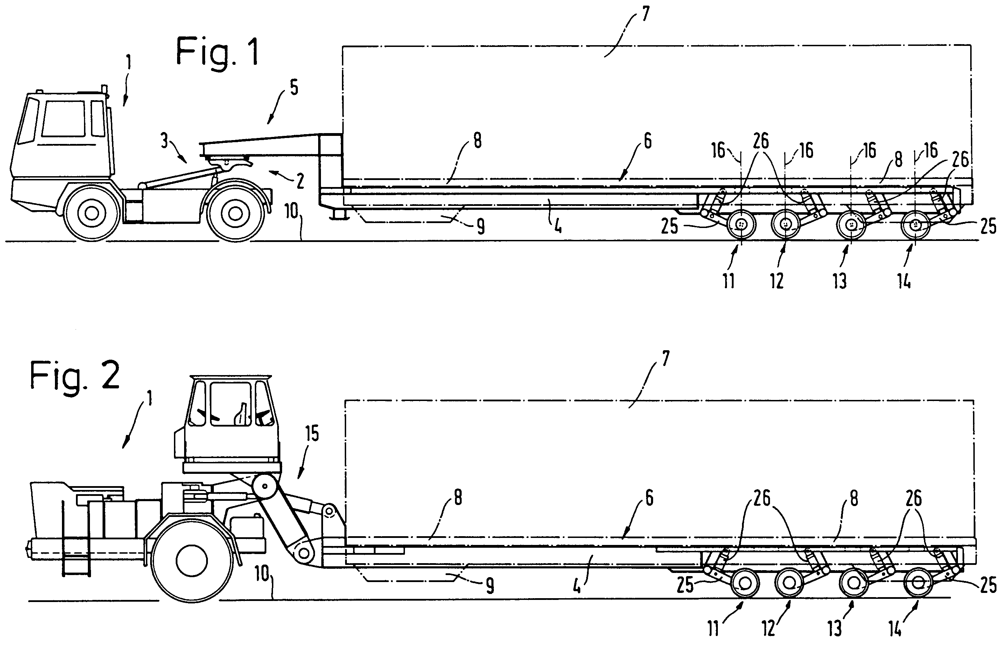

Wie aus Fig. 1 erkennbar besitzt die als Sattelauflieger ausgebildete Antriebseinheit 1 eine Sattelkupplung 2, die über eine Hubeinrichtung 3 mit dem Fahrzeugrahmen des Sattelaufliegers verbunden ist.

Der als Nachläufer konzipierte Tragrahmen 4 ist im Bereich seines der Antriebseinheit 1 zugewandten Anschlußendes in Form einer Schwanenhals-Konstruktion 5 ausgebildet, die auf ihrer Unterseite bekannte Elemente zum Anschluß an die Sattelkupplung 2 trägt.

An die Schwanenhals-Konstruktion 5 schließt sich zum Fahrzeugende hin eine Ladefläche 6 an, die zum Unterfahren von Paletten, sog. Cassetten oder dgl. eingerichtet ist. Eine mit einer Last 7 beladene Cassette 8, deren Füße 9, den Tragrahmen 4 in Richtung des Bodens 10, d.h. nach unten überragen, ist in den Fig. 1 und 2 mit strichpunktierten Linien dargestellt. Außer den vorderen Füßen 9 besitzt die Cassette 8 auch im Bereich des Fahrzeugendes Füße, die jedoch der besseren Übersicht halber nicht dargestellt sind.

An dem der Antriebseinheit 1 und der Schwanenhals-Konstruktion 5 entgegengesetzten Ende ist der Tragrahmen 4 mit Achslinien ausgestattet. Bei den in den Fig. 1 und 2 dargestellten Ausführungsbeispielen sind insgesamt vier Achslinien 11, 12, 13 und 14 vorgesehen.

Bei dem in Fig. 2 dargestellten Ausführungsbeispiel ist die Antriebseinheit 1 als Triebkopf ausgebildet. Dieser Triebkopf ist mit dem Tragrahmen 4 über eine Hubeinrichtung 15 verbunden. Wie aus Fig. 2 hervorgeht bilden der Triebkopf und der Tragrahmen 4 eine integrierte Einheit.

Mit Ausnahme seines Anschlußendes im Bereich der Hubeinrichtung 15 ist der Tragrahmen 4 bei dem in Fig. 2 dargestellten Ausführungsbeispiel in der gleichen Weise ausgestaltet wie der Tragrahmen 4 des Ausführungsbeispieles nach Fig. 1.

Im Ausführungsbeispiel gemäß Fig. 2 besitzt der Tragrahmen 4 im Bereich seines dem Triebkopf abgewandten Endes ebenfalls insgesamt vier Achslinien 11, 12, 13 und 14.

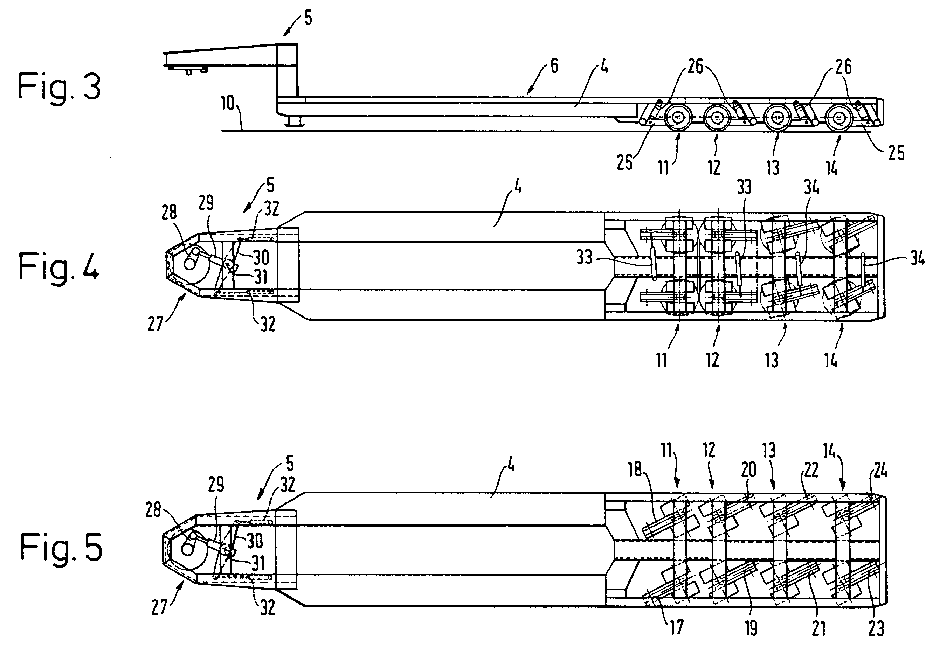

Wie aus den Fig. 4 und 5 hervorgeht, ist jede Achslinie jeweils mit zwei Pendelachsen ausgestattet, die jeweils über eine vertikale Achse 16 (siehe Fig. 1) drehbar an dem Tragrahmen 4 befestigt sind. In den Fig. 4 und 5 sind die Pendelachsen der Achslinie 11 mit den Bezugszeichen 17 und 18, der Achslinie 12 mit dem Bezugszeichen 19 und 20, der Achslinie 13, mit dem Bezugszeichen 21 und 22 und der Achslinie 14, mit dem Bezugszeichen 23 und 24 bezeichnet.

Die Pendelachsen 17 bis 24 sind gleich und können in herkömmlicher Weise aufgebaut sein. Jede Pendelachse besitzt einen Radsatz, der in an sich bekannter Weise jeweils am freien Ende eines Armes 25 (vgl. Fig. 1 und 2) gelagert ist, der mit seinem anderen Ende über einen weiteren Arm an einem Drehgestell befestigt ist, welches um die Achse 16 (vgl. Fig. 1) verschwenkt werden kann.

Über Hydraulikzylinder 26 (vgl. Fig. 1 und 2) kann der Arm 25 verschwenkt werden, wodurch eine Hubeinrichtung gebildet ist, mit der in Zusammenarbeit mit der Hubeinrichtung 3 bzw. 15 der Antriebseinheit 1 der Tragrahmen 4 in eine abgesenkte Stellung (vgl. Fig. 3) und in eine angehobene Stellung (vgl. Fig. 1 und 2) verbracht werden kann.

In der abgesenkten Stellung kann der Tragrahmen in an sich bekannter Weise unter die auf dem Boden 10 abgestellten Paletten oder Cassetten eingefahren, bzw. nach dem Absetzen der Paletten oder Cassetten auf den Boden 10 aus diesen ausgefahren werden.

In angehobenem Zustand gemäß den Fig. 1 und 2 können die Paletten bzw. die Cassetten in herkömmlicher Weise umgeschlagen, d.h. von einem ersten zu einem zweiten Ort verbracht werden.

Die Steuereinrichtung zum Verschwenken der Pendelachsen 17 bis 24 um die vertikale Achse 16 ist in den Zeichnungen nicht dargestellt. Ein wesentliches Kriterium dieser Steuereinrichtung ist es jedoch, daß für die Diagonalfahrt alle Pendelachsen nach links bzw. rechts unabhängig vom Einschlagwinkel zwischen Antriebseinheit 1 und Tragrahmen 4 in eine definierte Anschlaglage eingeschlagen werden können, wie dies in Fig. 5 dargestellt ist.

Im normalen Fahrbetrieb dagegen werden die Pendelachsen 19 bis 22 der ersten und zweiten Achslinien 11 und 12 erfindungsgemäß in Geradeausposition über Lenkzylinder 33 (Fig. 4) festgestellt und die übrigen Pendelachsen 21, 22 und 23, 24 der hinter den festgestellten Pendelachsen liegenden Achslinien 13 und 14, in Abhängigkeit vom Einschlagwinkel zwischen der Antriebseinheit 1 und dem Tragrahmen 4 eingeschlagen.

Zu diesem Zweck ist im Bereich der Schwanenhals-Konstruktion 5 des Tragrahmens 4 ein hydraulisches Verdrängersystem 27 vorgesehen, welches aus einem Hebel 28 besteht, der über eine Teleskopanordnung 29 auf ein Joch 30 einwirkt, das um eine in der Mittelachse des Tragrahmens 4 angeordnete vertikale Achse 31 hin- und herverschwenkbar ist. Die Anordnung ist dabei derart getroffen, daß der Hebel 28 mit der Sattelkupplung 2 über einen nicht dargestellten Lenkkeil gekoppelt ist, so daß der jeweilige Einschlagwinkel zwischen Antriebseinheit 1 und Tragrahmen 4 auf das Joch 30 übertragen wird.

An den freien Enden des Jochs 30 sind jeweils Hydraulikzylinder 32 angeschlossen, die über nicht dargestellte Leitungen mit hydraulischen Lenkzylindern 34 (vgl. Fig. 4) der Pendelachsen 21, 22 und 23, 24 verbunden sind. Über das hydraulische Verdrängersystem 27 wird somit der Einschlagwinkel zwischen der Antriebseinheit 1 und dem Tragrahmen 4 abgegriffen und auf die Lenkzylinder 34 der Pendelachsen 21 bis 24 der Achslinien 13 und 14 übertragen.

Ein wesentliches Element der Erfindung ist es, daß die Steuereinrichtung derart gestaltet ist, das lediglich die Pendelachsen 21 und 22 der Achslinie 13 sowie die Pendelachsen 23 und 24 der Achslinie 14 in Abhängigkeit des Einschlagwinkels eingeschlagen werden, die Pendelachsen 17 und 18 sowie 19 und 20 der Achslinien 11 und 12 jedoch dabei in Geradeausposition festgestelt sind. Dadurch wirken die Achslinien 11 und 12 im Fahrbetrieb sozusagen als Tandemachse, während die Achslinien 13 und 14 in der oben geschilderten Weise gesteuert werden. Eine derartige Steuereinrichtung läßt sich relativ einfach ohne komplizierte Elektronik und deshalb auch störunanfällig gestalten.

## Patentansprüche

1. Hubfahrzeug zum Umschlag von Lasten über Palletten,
- mit einer Antriebseinheit (1),
- einem Tragrahmen (4) der mit der Antriebseinheit um eine vertikale Achse verschwenkbar verbunden ist,
- mindestens zwei Achslinien (11 bis 14) die an dem der Antriebseinheit (1) entgegengesetzen Ende des Tragrahmens (4) angeordnet sind,
- sowie einer Steuereinrichtung, über die die Räder der Achslinien des Tragrahmens lenkbar sind,
dadurch **gekennzeichnet**, daß
- pro Achslinie (11 bis 14) zwei Pendelachsen (17 bis 24) vorgesehen sind, die jeweils über eine vertikale Achse (16) drehbar an dem Tragrahmen (4) befestigt sind,
- und daß die Steuereinrichtung derart gestaltet ist, daß in Diagonalfahrt alle Pendelachsen nach links bzw. rechts unabhängig vom Einschlagwinkel zwischen Antriebseinheit (1) und Tragrahmen (4) in eine definierte Anschlaglage eingeschlagen werden.

2. Hubfahrzeug nach Anspruch 1, mit einem Tragrahmen mit mindestens drei Achslinien,
dadurch **gekennzeichnet**, daß
die Steuereinrichtung derart gestaltet ist, daß
- im Fahrbetrieb die Pendelachsen (17 bis 20) der vorderen Achslinie bzw. der vorderen Achslinien (11, 12) in Geradeausposition festgestellt, und
- die übrigen Pendelachsen (21, 22, 23, 24) der hinter dieser bzw. hinter diesen festgestellten Pendelachsen liegenden Achslinien (13, 14) in Abhängkeit vom Einschlagwinkel zwischen Antriebseinheit (1) und Tragrahmen (4) eingeschlagen werden.

3. Hubfahrzeug nach Anspruch 1 oder 2,
dadurch **gekennzeichnet**, daß
die Antriebseinheit (1) als abkoppelbarer Sattelauflieger und der Tragrahmen als Nachläufer ausgebildet sind.

4. Hubfahrzeug nach Anspruch 1 oder 2,
dadurch **gekennzeichnet**, daß
die Antriebseinheit (1) als mit dem Tragrahmen verbundener integrierter Triebkopf ausgebildet ist.

5. Hubfahrzeug nach Anspruch 3 oder 4,
dadurch **gekennzeichnet**, daß
das Anschlußende des Tragrahmens (4) an den Sattelauflieger bzw. den Triebkopf als Schwanenhalskonstruktion (5) ausgebildet ist.

6. Hubfahrzeug nach Anspruch 4,
dadurch **gekennzeichnet**, daß
der Triebkopf im Bereich des Anschlußendes des Tragrahmens (4) mit einer Hubeinrichtung (15) für den Tragrahmen ausgestattet ist.

7. Hubfahrzeug nach einem oder mehreren der vorherigen Ansprüche,
dadurch **gekennzeichnet**, daß
der Tragrahmen (4) im Bereich seiner seitlichen Begrenzung mit über seine gesamte Länge durchlaufenden Außenträgern ausgestattet ist.

8. Hubwagen nach Anspruch 1 oder 2,
dadurch **gekennzeichnet**, daß
das Verschwenken der Pendelachsen (17 bis 24) um die vertikale Achse (16) über hydraulische Lenkzylinder (33, 34) erfolgt.

9. Hubwagen nach Anspruch 2 und 8,
dadurch **gekennzeichnet**, daß
der Einschlagwinkel über ein hydraulisches Verdrängersystem (27) abgegriffen wird, das mit den hydraulischen Lenkzylindern (34) der übrigen Pendelachsen (21, 22, 23, 24) in Verbindung steht.

10. Hubwagen nach Anspruch 9,
dadurch **gekennzeichnet**, daß
das hydraulische Verdrängersystem (27) über hydraulische Leitungen unmittelbar mit den hydraulischen Lenkzylindern (33) in Verbindung steht.

11. Hubwagen nach Anspruch 1 oder 2 sowie 8 und 9,
dadurch **gekennzeichnet**, daß
die Steuereinrichtung derart gestaltet ist, daß für die Diagonalfahrt
- die hydraulische Verbindung zwischen dem hydraulischen Verdrängersystem (27) und den Lenkzylindern (34) der Pendelachsen (21, 22, 23, 24) unterbrochen ist, und
- alle Lenkzylinder (33, 34) aller Pendelachsen (17 bis 24) gemeinsam wahlweise nach links oder rechts in die definierte Anschlaglage ausfahrbar sind.

12. Hubwagen nach Anspruch 1 und 11,
dadurch **gekennzeichnet**, daß
die Anschlaglage der Lenkzylinder (33, 34) hydraulisch oder mechanisch definiert ist.
